# EUROPÄISCHE PATENTANMELDUNG

(11) **EP 2 208 935 A1**
(43) Veröffentlichungstag der Anmeldung: **21.07.2010**
(21) Anmeldenummer: 09150596.6
(22) Anmeldetag: 15.01.2009
(51) Int. Cl.: F23R 3/28, F23R 3/46, F23C 9/00

(54) **Brennkammer und Gasturbine**

(71) Anmelder: Siemens Aktiengesellschaft, 80333 München (DE)
(72) Erfinder: Hase, Matthias, 45478, Mülheim (DE); Krebs, Werner, 45481, Mülheim an der Ruhr (DE)

(57) **Zusammenfassung**

Es wird eine Brennkammer (21) zur Verfügung gestellt, welche mindestens eine Strahldüse (3) mit einem Durchmesser D, einen Ausgang (5) und einen sich zwischen der Strahldüse (3) und dem Ausgang (5) erstreckenden Wandbereich (15) mit einer Länge L_{BK} umfasst. Das Verhältnis der Länge L_{BK} des Wandbereiches (15) zum Durchmesser D₁ der Strahldüse (3) ist größer als vier.

## Beschreibung

Die vorliegende Erfindung betrifft eine Brennkammer und eine Gasturbine.

Auf vorgemischten Strahlflammen basierende Verbrennungssysteme bieten gegenüber drallstabilisierten Systemen aufgrund der verteilten Wärmefreisetzungszonen und der fehlenden drallinduzierten Wirbel, insbesondere aus thermoakustischer Sicht, Vorteile. Durch geeignete Wahl des Strahlimpulses lassen sich kleinskalige Strömungsstrukturen erzeugen, die akustisch induzierte Wärmefreisetzungsfluktuationen dissipieren und somit Druckpulsationen, die typisch für drallstabilisierte Flammen sind, unterdrücken.

Die Strahlflammen werden durch Einmischen heißer rezirkulierender Gase stabilisiert. Die Rezirkulation der Heißgase ist dabei auch von den geometrischen Abmessungen der Brennkammer im Verhältnis zu dem Strahldüsenring, welcher die Hauptbrennstufe oder die Hauptbrennstufen bildet, abhängig.

In US 7,062,917 B2 wird eine Gasturbine beschrieben, die wenigstens eine zu einer Mittelachse konzentrische Brennkammer zur flammenlosen Oxidation von Brennstoff umfasst, wobei Brennstoffdüsen die Brennstoffeinleitungsrichtung und Luftdüsen die Lufteingangsrichtung im wesentlichen übereinstimmend festlegen und mit einem Radius zu der Mittelachse der Brennkammer angeordnet sind, der größer ist als der Durchmesser bzw. der Radius der Öffnung, die den Ausgang der Brennkammer zur Turbine hin bildet.

Im Lichte dieses Standes der Technik ist eine Aufgabe der vorliegenden Erfindung, eine vorteilhafte Brennkammer zur Verfügung zu stellen. Eine weitere Aufgabe der vorliegenden Erfindung besteht darin, eine vorteilhafte Gasturbine zur Verfügung zu stellen.

Die erste Aufgabe wird durch eine Brennkammer nach Anspruch 1 gelöst. Die zweite Aufgabe wird durch eine Gasturbine nach Anspruch 9 gelöst. Die abhängigen Ansprüche kennzeichnen vorteilhafte Ausgestaltungen der Erfindung.

Eine erfindungsgemäße Brennkammer umfasst mindestens eine Strahldüse mit einem Durchmesser D₁, einen Ausgang und einen sich zwischen der Strahldüse und dem Ausgang erstreckenden Wandbereich mit einer Länge L_{BK}. Das Verhältnis der Länge L_{BK} des Wandbereiches zum Durchmesser D₁ der Strahldüse ist größer als vier und kann insbesondere größer als acht sein. Als Brennkammer soll hierbei derjenige Teil der Gasturbine sein, in der die Wärmefreisetzung durch die Verbrennung des Brennstoffes im Wesentlichen stattfindet.

Die erfindungsgemäße Brennkammer kann insbesondere eine Mittelachse und einen Ausgang mit einem Radius R₂ umfassen, wobei die mindestens eine Strahldüse in einem Abstand R₁ zur Mittelachse angeordnet ist. Der Abstand R₁ der Strahldüse von der Mittelachse ist dann kleiner oder gleich dem Radius R₂ des Ausgangs der Brennkammer. Außerdem kann der Wandbereich zylindrisch ausgebildet sein.

An den Ausgang der Brennkammer kann sich ein Übergangsbauteil (Transition Piece) anschließen, welches die Brennkammer mit beispielsweise einer Turbine verbindet. Im Rahmen der vorliegenden Erfindung wird das Übergangsbauteil nicht als Teil der Brennkammer, sondern als von der Brennkammer getrenntes Bauteil verstanden, da im Übergangsbauteil in der Regel keine Wärmefreisetzung durch Verbrennung mehr erfolgt. Der Ausgang der Brennkammer wird demgemäß nicht durch den Ausgang des Übergangsbauteiles gebildet.

Durch eine derartige geometrische Ausgestaltung der Brennkammer ergibt sich ein im Vergleich zum oben zitierten Stand der Technik erweiterter Bereich für die Positionierung der Strahldüse bzw. der Strahldüsen. Durch die Wahl des Verhältnisses der Länge L_{BK} des zylindrischen Wandbereiches zum Durchmesser D₁ der Strahldüse(n) größer als vier wird bei Positionierung der Strahldüse in einem Abstand R₁ von der Mittelachse, der kleiner oder gleich dem Radius R₂ des Ausgangs der Brennkammer ist, eine stabile Rezirkulation der Heißgase ermöglicht, welche zu einem weiten Betriebsbereich des Brennsystems führt. Auch thermoakustische Probleme werden durch die stabile Rückstromzone vermieden.

Die erfindungsgemäße Brennkammer kann eine Anzahl von Strahldüsen umfassen, die ringförmig angeordnet sind, um eine homogene Verbrennung zu erzielen. Die Strahldüsen können insbesondere ringförmig um die Mittelachse der Brennkammer herum angeordnet sein. Weiterhin können die Strahldüsen in Form von mehreren Strahldüsenringen angeordnet sein, wobei die Strahldüsenringe ihrerseits jeweils um die Mittelachse der Brennkammer herum angeordnet sein können.

Im Rahmen der Erfindung kann das Verhältnis der Länge L_{BK} der Brennkammer zum Durchmesser D₁ der Strahldüse(n) insbesondere kleiner als 20 sein, um die Baulage der Brennkammer nicht unnötig zu vergrößern.

Zudem kann zwischen dem zylindrischen Wandbereich der Brennkammer und dem Brennkammerausgang mindestens eine senkrecht zur Mittelachse der Brennkammer verlaufende Wand angeordnet sein. Alternativ kann die Brennkammer einen sich in Richtung auf den Ausgang an den zylindrischen Wandbereich anschließenden konischen Bereich umfassen. Der konische Bereich der Brennkammer kann dabei mindestens einen Wandbereich umfassen, dessen Oberfläche in Richtung zum Ausgang der Brennkammer einen Winkel α mit der Mittelachse der Brennkammer einschließt, wobei der Winkel α vorteilhafterweise kleiner als 60° ist, und insbesondere kleiner 45° sein kann.

Die erfindungsgemäße Gasturbine umfasst wenigstens eine erfindungsgemäße Brennkammer. Die erfindungsgemäße Gasturbine hat dieselben Vorteile wie die erfindungsgemäße Brennkammer.

Ingesamt wird sowohl durch die erfindungsgemäße Brennkammer als auch durch die erfindungsgemäße Gasturbine eine stabile Rezirkulation der Heißgase gewährleistet, welche einen weiten Betriebsbereich ermöglicht. Durch die während des Betriebes der erfindungsgemäßen Brennkammer beziehungsweise der erfindungsgemäßen Gasturbine erzeugte stabile Rückströmzone werden thermoakustische Probleme vermieden.

Weitere Merkmale, Eigenschaften und Vorteile der vorliegenden Erfindung werden nachfolgend anhand von Ausführungsbeispielen unter Bezugnahme auf die beigefügten Figuren näher beschrieben. Die beschriebenen Merkmale sind dabei sowohl einzeln als auch in Kombination miteinander vorteilhaft.
- Fig. 1: zeigt schematisch einen Schnitt durch einen Teil einer Brennkammer.
- Fig. 2: zeigt schematisch einen Schnitt durch einen Teil einer Brennkammer, an die ein Übergangsbauteil angeschlossen ist.
- Fig. 3: zeigt schematisch einen Schnitt durch einen Teil einer zylindrischen Brennkammer.
- Fig. 4: zeigt schematisch einen Schnitt durch einen Teil einer Brennkammer, die einen zylindrischen Bereich und einen konischen Bereich umfasst.
- Fig. 5: zeigt schematisch einen Schnitt durch einen Teil einer Brennkammer, die einen zylindrischen Bereich, einen senkrecht zur Mittelachse verlaufenden Wandbereich und einen zylindrischen Ausgangsbereich umfasst.
- Fig. 6: zeigt schematisch eine erfindungsgemäße Gasturbine.

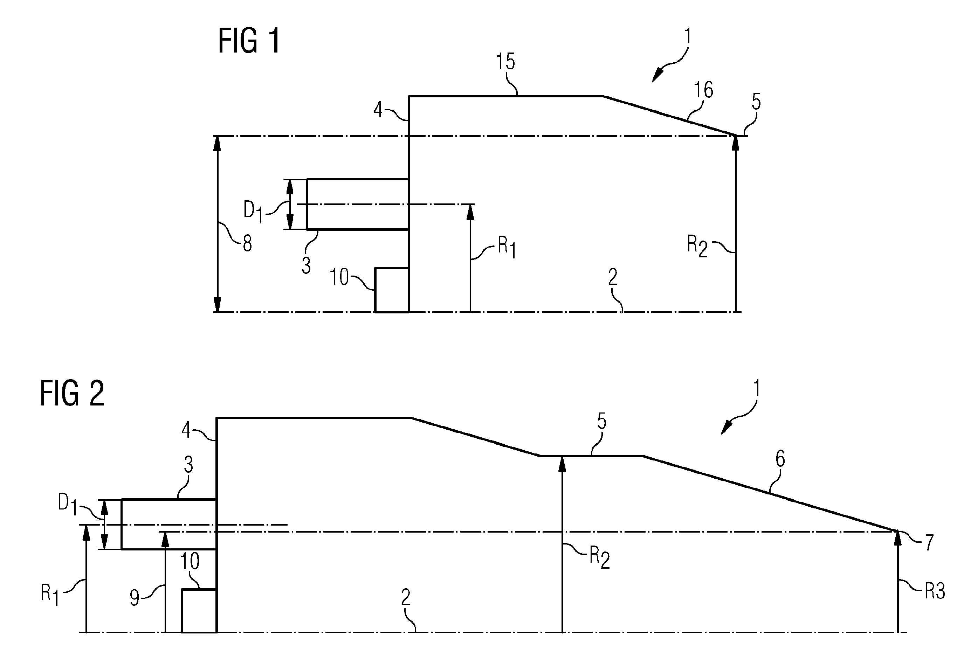

Im Folgenden wird ein erstes Ausführungsbeispiel der vorliegenden Erfindung anhand der Figuren 1 bis 3 näher erläutert. Die Figuren 1 und 2 dienen dabei dazu, die Problematik zu verdeutlichen, die sich aus dem in US 7,062,915 geforderten Kriterium, dass der Radius des Düsenringes größer ist, als der Radius des Ausgangs der Brennkammer, ergibt.

Die Figur 1 zeigt schematisch einen Schnitt durch einen Teil einer Rohrbrennkammer 1. Die Mittelachse ist durch die Bezugsziffer 2 gekennzeichnet. Die Brennkammer 1 umfasst eine Rückwand 4, einen zylindrischen Wandbereich 15, einen konischen Bereich 16 und einen Ausgang 5 mit Radius R₂. An den Ausgang 5 der Brennkammer 1 kann beispielsweise eine Turbine angeschlossen sein. An der Rückwand 4 ist mindestens eine Pilotbrennstoffdüse 10 nahe der Mittelachse 2 angeordnet. Weiterhin sind an der Rückwand 4 in einem Abstand R₁ von der Mittelachse 2 entfernt eine Anzahl von Strahldüsen 3 ringförmig um die Mittelachse 2 herum angeordnet. Diese bilden einen Strahldüsenring mit einem Durchmesser, der dem doppelten des Abstandes R₁ entspricht.

An die Rückwand 4 schließt sich in Richtung zum Ausgang 5 der Brennkammer 1 zunächst der zylindrische Bereich 15 der Brennkammer 1 an. Zwischen dem zylindrischen Bereich 15 und dem Ausgang 5 der Brennkammer 1 ist der konische Bereich 16 der Brennkammer 1 so angeordnet, dass sich der Abstand der Außenwand der Brennkammer 1 von der Mittelachse 2 zum Ausgang 5 der Brennkammer 1 hin verringert. Der Abstand des den Ausgang 5 der Brennkammer 1 bildenden Randes der Brennkammer 1 von der Mittelachse 2 entspricht dem Radius R₂ des Ausgangs 5.

Der mit der Bezugsziffer 8 gekennzeichnete Abstandsbereich von der Mittelachse 2 kennzeichnet denjenigen Bereich, der für die Positionierung von Strahldüsen 3 vom in US 7,062,917 genannten Kriterium, dass der Radius des Düsenringes größer ist, als der Radius R₂ der den Ausgang der Brennkammer bildenden Öffnung, ausgeschlossen wird. In der Figur 1 sind die Strahldüsen 3 daher entgegen des genannten Kriteriums angeordnet, d.h. der Abstand R₁ ist kleiner als der Radius R₂ des Ausgangs.

Die Figur 2 zeigt schematisch die bereits in der Figur 1 gezeigte Brennkammer 1, wobei an den Ausgang 5 ein Übergangsbauteil (Transition Piece) 6 angeschlossen ist. Das Übergangsbauteil 6 umfasst einen Ausgang 7, an den beispielsweise eine Turbine angeschlossen werden kann. Der Ausgang 7 des Übergangsbauteiles 6 hat dabei einen Radius R₃ bezogen auf die Mittelachse 2. Der Radius R₃ ist kleiner als der Radius R₂ des Ausganges 5 der Brennkammer 1.

Die Bezugsziffer 9 kennzeichnet den Abstandsbereich von der Mittelachse 2, welcher für die Positionierung der Strahldüsen 3 vom Kriterium im oben genannten Stand der Technik nicht zugelassen wäre, wenn der Radius R₃ des Ausganges 7 des Übergangsbauteiles 6 als Radius des Ausganges 5 der Brennkammer 1 angesehen würde. In diesem Fall würde die Anordnung der Strahldüsen 3 das Kriterium erfüllen.

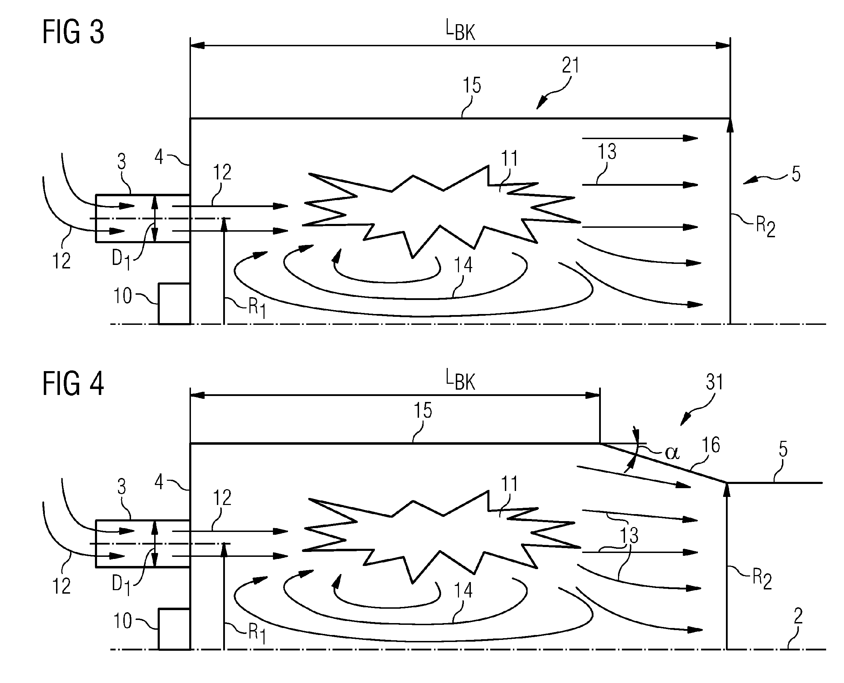

Die Figur 3 zeigt nun schematisch einen Schnitt durch einen Teil einer erfindungsgemäßen Brennkammer 21, bei der es sich um eine im Vergleich zur Figur 1 vereinfachte Ausführungsvariante handelt. Die in der Figur 3 gezeigte Brennkammer 21 hat eine zylindrische Form mit einer Länge L_{BK}. Der Radius R₂ des Zylinders entspricht dem Radius des Ausgangs 5 der Brennkammer 21. Die Strahldüsen 3 sind in einem Abstand R₁ ringförmig um die Mittelachse 2 herum angeordnet, wobei der Abstand R₁ kleiner ist, als der Abstand R₂. Man beobachte, dass bei einer derartigen Brennkammer 21 das in US 7,062,917 B2 angegebene Kriterium nicht zu erfüllen ist und eine derartige Brennkammer durch US 7,062,917 B2 daher ausgeschlossen wäre.

Durch die Strahldüsen 3 wird ein vorgemischtes oder nicht vorgemischtes Luft-Brennstoff-Gemisch in die Brennkammer 21 eingedüst. Die Strömungsrichtung des Luft-Brennstoff-Gemisches ist durch die Bezugsziffer 12 gekennzeichnet. Die Verbrennung des Luft-Brennstoff-Gemisches im Inneren der Brennkammer 21 ist als Flamme 11 gekennzeichnet. Das bei der Verbrennung entstehende Heißgas wird in Strömungsrichtung 13 zum Ausgang 5 der Brennkammer 21 geleitet. Ein Teil des Heißgases rezirkuliert in der Brennkammer 21. Die Strömungsrichtung des Rezirkulationsstromes ist durch die Bezugsziffer 14 gekennzeichnet.

Jede der Strahldüsen 3 im Strahldüsenring weist einen Durchmesser D₁ auf. Für die Länge L_{BK} der zylindrischen Brennkammer 21 bzw. des zylindrischen Bereiches 15 der Brennkammer 1 gilt, dass das Verhältnis der Länge L_{BK} zu dem Durchmesser D₁ der Strahldüsen 3 größer als 4 und kleiner als 20 ist (4 < L_{BK}/D₁ < 20). Die Brennkammer 21 mit den genannten Abmessungen unterstützt eine Heißgasrezirkulation, welche einen stabilen Verbrennungsvorgang gewährleistet, auch dann, wenn das in US 7,062,917 B2 angegebene Kriterium nicht erfüllt ist. Sie unterstützt zudem einen sicheren Ausbrand und eine ungestörte Abströmung der Abgase.

Die Brennkammer 21 ist dabei der Teil einer Gasturbine, in der die Wärmefreisetzung durch die Verbrennung des Brennstoffes im Wesentlichen stattfindet. An die Brennkammer 21 schließt sich das sogenannte Übergangsbauteil (Transition Piece) an, welches für die Überführung der Strömung aus einer Rohrbrennkammer auf die als Ringraum ausgeführte Turbine zuständig ist. Im Übergangsbauteil 6 findet kein wesentlicher Reaktionsanteil mehr statt.

Im Folgenden wird ein zweites Ausführungsbeispiel anhand der Figur 4 näher erläutert. Elemente, die Elementen des ersten Ausführungsbeispieles entsprechen, sind mit den selben Bezugszeichen gekennzeichnet und werden nicht erneut im Detail beschrieben.

Die Figur 4 zeigt schematisch einen Schnitt durch einen Teil einer Brennkammer 31, die im Unterschied zu der in der Figur 3 gezeigten Brennkammer 21 einen zylindrischen Wandbereich 15 und einen konischen Wandbereich 16 umfasst. Der konische Bereich 16 ist zwischen dem zylindrischen Bereich 15 und dem Ausgang 5 der Brennkammer 31 angeordnet. Der konische Bereich 16 ist dabei so ausgestaltet, dass sich der Abstand der Brennkammerwand von der Mittelachse 2 zum Ausgang 5 der Brennkammer 31 hin verringert. Der Ausgang 5 der Brennkammer 31 kann dabei zylindrisch ausgestaltet sein.

Die Wand der Brennkammer 31 verläuft im zylindrischen Bereich 15 parallel zur Mittelachse 2. Im konischen Bereich 16 der Brennkammer 31 verläuft die Brennkammerwand in Richtung zum Ausgang der Brennkammer 31 in einem Winkel α zur Mittelachse 2 bzw. zur Wand des zylindrischen Bereiches 15. Der Winkel α ist kleiner als 60° (0° < α < 60°) und kann insbesondere kleiner als 45° sein (0° < α < 45°). Das Verhältnis der Länge L_{BK} des zylindrischen Bereiches 15 der Brennkammer 31 zu dem Durchmesser D₁ der Strahldüsen 3 ist im vorliegenden Ausführungsbeispiel größer als 4 und kleiner als 19 (4 < L_{BK}/D₁ < 19).

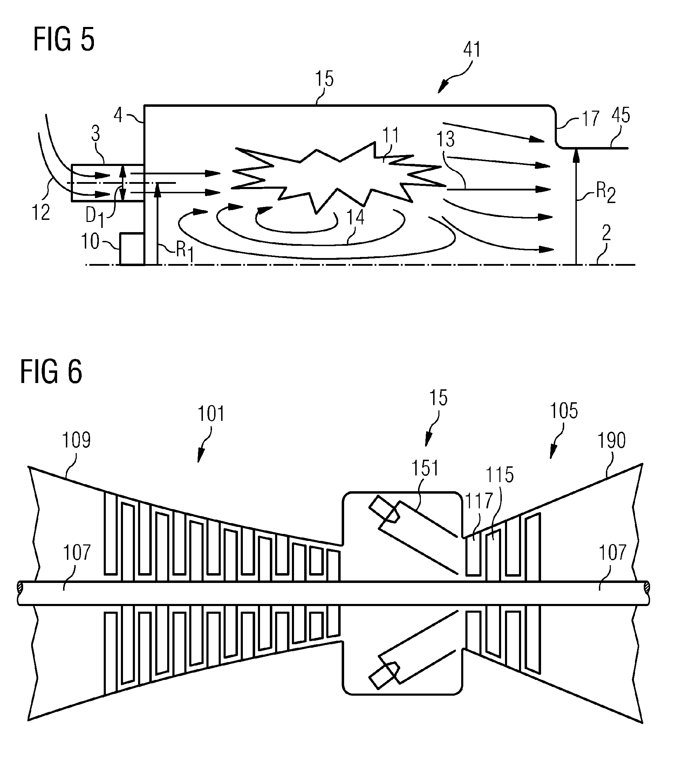

Nachfolgend wird ein drittes Ausführungsbeispiel anhand der Figur 5 näher beschrieben. Elemente, die Elementen der vorangehend beschriebenen Ausführungsbeispiele entsprechen, sind mit den selben Bezugszeichen gekennzeichnet und werden nicht erneut im Detail beschrieben. Die Figur 5 zeigt schematisch einen Schnitt durch einen Teil einer Brennkammer 41. Die Brennkammer 41 umfasst einen zylindrischen Bereich 15, einen zylindrisch ausgestalteten Ausgangsbereich 45 und einen zwischen dem zylindrischen Bereich 15 und dem zylindrischen Ausgangsbereich 45 angeordneten Wandbereich 17. Der Wandbereich 17 verläuft senkrecht zur Mittelachse 2. Das Verhältnis der Länge L_{BK} des zylindrischen Bereiches 15 der Brennkammer 41 zu dem Durchmesser D₁ der Strahldüsen 3 ist im vorliegenden Ausführungsbeispiel größer als 5 und kleiner als 20 (5 < L_{BK}/D₁ < 20).

Ein Ausführungsbeispiel für eine erfindungsgemäße Gasturbine wird im Folgenden anhand der Figur 6 in Verbindung mit den Figuren 1 bis 5 näher beschrieben. Die Figur 6 zeigt schematisch eine Gasturbine. Diese weist im Inneren einen um eine Rotationsachse drehgelagerten Rotor mit einer Welle 107 auf, der auch als Turbinenläufer bezeichnet wird. Entlang des Rotors folgen aufeinander ein Ansauggehäuse 109, ein Verdichter 101, eine Brennkammeranordnung 151, bspw. eine Anzahl von gleichmäßig um den Rotor herum verteilten Rohrbrennkammern, eine Turbine 105 und das Abgasgehäuse 190.

Die Brennkammeranordnung 151 kommuniziert mit einem ringförmigen Heißgaskanal. Dort bilden mehrere hintereinander geschaltete Turbinenstufen die Turbine 105. Jede Turbinenstufe ist aus Schaufelringen gebildet. In Strömungsrichtung eines Arbeitsmediums gesehen folgt im Heißgaskanal einer Leitschaufelreihe 117 eine aus Laufschaufeln 115 gebildete Reihe. Die Leitschaufeln 117 sind dabei an einem Innengehäuse eines Stators befestigt, wohingegen die Laufschaufeln 115 einer Reihe am Rotor angebracht sind. An dem Rotor angekoppelt ist ein Generator oder eine Arbeitsmaschine.

Während des Betriebes der Gasturbine wird vom Verdichter 101 durch das Ansauggehäuse 109 Luft angesaugt und verdichtet. Die am turbinenseitigen Ende des Verdichters 101 bereitgestellte verdichtete Luft wird zu den Brennkammeranordnungen 151 geführt und dort mit einem Brennstoff vermischt. Das Gemisch wird dann unter Bildung des Arbeitsmediums in den Brennkammern verbrannt. Von dort aus strömt das Arbeitsmedium durch die Übergangsstücke und an den Leitschaufeln 117 und den Laufschaufeln 115 vorbei. An den Laufschaufeln 115 entspannt sich das Arbeitsmedium impulsübertragend, so dass die Laufschaufeln 115 den Rotor antreiben und dieser die an ihn angekoppelte Arbeitsmaschine.

Die Brenneranordnung 151 umfasst erfindungsgemäße Brennkammern und Übergangsbauteile. In Bezug auf die Ausgestaltung der erfindungsgemäßen Brennkammern wird auf die zuvor beschriebenen Ausführungsbeispiele verwiesen.

## Patentansprüche

1. Brennkammer (21, 31, 41), welche mindestens eine Strahldüse (3) mit einem Durchmesser D₁, einen Ausgang (5) und einen sich zwischen der Strahldüse (3) und dem Ausgang (5) erstreckenden Wandbereich (15) mit einer Länge L_{BK} umfasst,
**dadurch gekennzeichnet, dass**
das Verhältnis der Länge L_{BK} des Wandbereiches (15) zum Durchmesser D₁ der Strahldüse (3) größer als vier ist.

2. Brennkammer (21, 31, 41) nach Anspruch 1,
**dadurch gekennzeichnet, dass**
- sie eine Mittelachse (2) aufweist,
- die mindestens eine Strahldüse (3) in einem Abstand R₁ zur Mittelachse angeordnet ist,
der Wandbereich ein zylindrischer Wandbereich (15) ist und
- der Ausgang (5) einen Radius R₂ aufweist,
wobei der Abstand R₁ der Strahldüse (3) von der Mittelachse (2) kleiner oder gleich dem Radius R₂ des Ausgangs (5) der Brennkammer (21, 31, 41) ist.

3. Brennkammer (21, 31, 41) nach Anspruch 1 oder Anspruch 2,
**dadurch gekennzeichnet, dass**
sie eine Anzahl von Strahldüsen (3) umfasst, die ringförmig angeordnet sind.

4. Brennkammer (21, 31, 41) nach Anspruch 3,
**dadurch gekennzeichnet, dass**
die Strahldüsen (3) ringförmig um die Mittelachse (2) der Brennkammer (21, 31, 41) herum angeordnet sind.

5. Brennkammer (21, 31, 41) nach einem der Ansprüche 1 bis 4,
**dadurch gekennzeichnet, dass**
das Verhältnis der Länge L_{BK} des zylindrischen Wandbereichs (15) zum Durchmesser D₁ der Strahldüse(n) (3) kleiner als 20 ist.

6. Brennkammer (41) nach Anspruch 2 und einem der Ansprüche 1 bis 5,
**dadurch gekennzeichnet, dass**
zwischen dem zylindrischen Wandbereich (15) der Brennkammer (41) und dem Ausgang (5) mindestens eine senkrecht zur Mittelachse der Brennkammer (41) verlaufende Wand (17) angeordnet ist.

7. Brennkammer (31) nach Anspruch 2 und einem der Ansprüche 1 bis 5,
**dadurch gekennzeichnet, dass**
die Brennkammer (31) einen sich an den zylindrischen Wandbereich (15) anschließenden konischen Bereich (16) umfasst.

8. Brennkammer (31) nach Anspruch 7,
**dadurch gekennzeichnet, dass**
der konische Bereich (16) der Brennkammer (31) mindestens einen Wandbereich umfasst, dessen Oberfläche in Richtung zum Ausgang (5) der Brennkammer (31) einen Winkel α mit der Mittelachse (2) der Brennkammer (31) einschließt, wobei der Winkel α kleiner als 60° ist.

9. Gasturbine, die wenigstens eine Brennkammer (21, 31, 41) nach einem der Ansprüche 1 bis 8 umfasst.
